# EUROPÄISCHE PATENTSCHRIFT

(11) **EP 2 420 739 B1**
(45) Veröffentlichungstag und Bekanntmachung des Hinweises auf die Patenterteilung: **09.10.2019**
(21) Anmeldenummer: 11176221.7
(22) Anmeldetag: 02.08.2011
(51) Int. Cl.: F24C 15/20, B01D 46/10, B01D 46/00

(54) **Dunstabzugshaube**
Vapour extractor
Hotte aspirante

(30) Priorität: 17.08.2010 DE 102010039398
(43) Veröffentlichungstag der Anmeldung: 22.02.2012
(73) Patentinhaber: BSH Hausgeräte GmbH, 81739 München (DE)
(72) Erfinder: Jordan, Dietmar, 75417 Mühlacker (DE); Neumann, Ulmar, 76694 Forst (DE); Wilde, Thomas, 76297 Stutensee (DE); Wössner, Markus, 74374 Zaberfeld (DE)

(56) Entgegenhaltungen:
- EP-A2- 1 798 482
- WO-A1-99/39804
- DE-A1- 10 012 889
- DE-A1-102004 049 978
- DE-A1-102006 005 807
- DE-A1-102008 020 149
- DE-C1- 19 848 394
- GB-A- 2 029 567
- US-A1- 2009 114 094

## Beschreibung

Die Erfindung betrifft eine Dunstabzugshaube mit Randabsauung.

Die von Dunstabzugshauben, beispielsweise über einem Kochherd, abgesaugte Luft ist mit Verunreinigungen, wie Wasser, Fett, Öl und dergleichen beladen. Es ist bekannt an Dunstabzugshauben Filterelemente vorzusehen, die zur Reinigung der angesaugten Luft dienen. Diese Filterelemente werden in der Regel an der Ansaugöffnung des Gehäuses der Dunstabzugshaube vorgesehen und decken diese Ansaugöffnung ab.

In der GB 2 029 567 A ist eine Dunstabzugshaube beschrieben. Insbesondere wird eine Dunstabzugshaube beschrieben, die erste Mittel zum Erzeugen eines ersten Luftstroms im Wesentlichen axial zu dem ersten Mittel und zweite Mittel aufweist, die einen zweiten Luftstrom erzeugen, der den ersten Luftstrom konzentrisch umgibt und in der Richtung entgegengesetzt zu dem ersten Luftstrom gerichtet ist.

Zudem sind in der WO 99/39804 A und der US 2009/0114094 A1 Sammelvorrichtungen für Lüfter beschrieben, die auf einem Gebäudedach angeordnet sein könne, bei denen mehrere Schichten von Filtermaterial vorgesehen sind und durch eine mittige Aussparung ein Luftschacht geführt ist.

In DE 10 2004 049 978 A1 wird eine Dunstabzugshaube beschrieben, in deren Gehäusekamin eine Filtereinheit vorgesehen ist bei der ein Fettfilter verwendet wird, der eine zylindrische Form aufweist. In der Mitte des Fettfilters ist ein Hohlraum vorgesehen. Um die Filtereinheit sind Abschirmelemente in Form von Platten vorgesehen, die zumindest teilweise horizontal angeordnet sind und zwischen denen über die Mantelfläche des Fettfilters Absaugbereiche geschaffen werden. Zudem kann über die Stirnseite des ringförmigen Fettfilters Luft in den Fettfilter eintreten. Ein Nachteil dieser Dunstabzugshaube besteht darin, dass die Abscheidung von Fett und Fettspeicherung in dem Fettfilter nicht gezielt eingestellt werden kann.

Weiterhin ist in der DE 198 48 394 C1 eine Filteranordnung beschrieben, in der eine Halterung in Form von voneinander beabstandeten Scheiben gebildet wird, zwischen denen jeweils eine Lage Filtermatte vorgesehen ist. Die Filtermatten sind ringförmig ausgebildet. Die untere Scheibe der Halterung ist im Gegensatz zu den weiteren Scheiben nicht mit einer Ringöffnung versehen. Ein Nachteil dieser Ausführungsform besteht darin, dass auch hierbei die Abscheidung von Fett und Fettspeicherung in dem Fettfilter nicht gezielt eingestellt werden kann.

Es ist zudem vorgeschlagen worden vor die Ansaugöffnung einer Dunstabzugshaube eine Prallplatte anzuordnen, durch die die Luftströmung zu dem und durch das Filterelement so beeinflusst wird, dass lediglich über den Rand der Prallplatte verunreinigte Luft zu dem Filterelement gelangt. Diese Art der Luftansaugung und Luftreinigung wird auch als Randabsaugung bezeichnet.

In der DE 10 2008 020 149 A1 ist eine Filtereinheit für eine Dunstabzugshaube beschrieben. Bei dieser Filtereinheit ist ein Wrasenleitblech mit einem Fettfilter zu einer Filtereinheit kombiniert ist. Hierbei bildet ein Teil des Wrasenleitblechs einen Prallbereich und dieser ist von einem Randabsaugbereich umgeben, in dem mindestens eine Durchtrittsöffnung vorgesehen ist. Die Durchtrittsöffnungen erstrecken sich hierbei von der Prallplatte aus über den Randabsaugbereich.

Die Absaugung der verunreinigten Luft oder des Wrasens über den vergleichsweise kleinen Spalt im Randbereich der Filtereinheit hat jedoch einen technischen Nachteil. Die Strömungsgeschwindigkeit der Luft ist hinter dem Wrasenleitblech und auch hinter dem Fettfilter lokal sehr unterschiedlich. Die dadurch hervorgerufenen Turbulenzen verursachen einen erhöhten Strömungswiderstand der Filtereinheit und damit eine Reduzierung des Fördervolumens der Dunstabzugshaube.

Aufgabe der vorliegenden Erfindung ist es daher eine Dunstabzugshaube zu schaffen, die dieses Problem bei einfachem Aufbau der Filtereinheit und der Dunstabzugshaube behebt oder zumindest minimiert.

Der Erfindung liegt die Erkenntnis zugrunde, dass diese Aufgabe gelöst werden kann, indem innerhalb der Dunstabzugshaube Strömungswiderstände gezielt eingestellt werden.

Erfindungsgemäß wird diese Aufgabe gelöst durch eine Dunstabzugshaube mit den Merkmalen gemäß Anspruch 1.

Als Randabsaugung wird im Sinne der Erfindung eine Absaugung an einer Dunstabzugshaube bezeichnet, bei der verunreinigte Luft, die auch als Wrasen bezeichnet wird, beim Anströmen der Ansaugöffnung der Dunstabzugshaube über eine Prallplatte an dem Eintritt in den mittleren Bereich der Ansaugöffnung gehindert wird und die Prallplatte von einem luftdurchlässigen Bereich oder Spalt umgeben ist, über den der Wrasen in die Dunstabzugshaube eintreten kann. Als aktiver Filterbereich des Filterelementes wird der Bereich bezeichnet, der zumindest teilsweise luftdurchlässig ist. Bei einem Filterelement, bei dem Filterlagen in einem Rahmen gehalten sind, ist der aktive Filterbereich daher seitlich durch den Rahmen begrenzt. Als Filterlage wird im Sinne der vorliegenden Erfindung eine Schicht bezeichnet, die aus Filtermaterial besteht. Vorzugsweise wird als Filterlage eine Streckmetalllage verwendet. Es können aber auch andere Schichten, wie beispielsweise Vlies oder Gewirke verwendet werden. Die Filterlagen sind in dem aktiven Filterbereich übereinander angeordnet. Als Mitte des aktiven Filterbereiches wird die Mitte der Fläche bezeichnet, die der aktive Filterbereich in senkrechter Projektion abdeckt.

Sofern nicht anders angegeben werden Richtungsbezeichnungen, wie vorne, hinten, oben und unten bezüglich der Richtungen an einem Filterelement verwendet, das in einer horizontalen Ansaugöffnung einer Dunstabzugshaube eingebracht ist. Als Oberseite wird beispielsweise die Seite bezeichnet, die in dem Betriebszustand des Filterelementes, in dem dieses in der Ansaugöffnung der Dunstabzugshaube eingebracht ist, dem Inneren der Dunstabzugshaube zugewandt ist. Als Unterseite wird beispielsweise die Seite bezeichnet, die die Anströmseite des Filterelementes in dem Betriebszustand darstellt. Die Unterseite des Filterelementes kann daher auch als Vorderseite und die Oberseite als Rückseite bezogen auf die Strömungsrichtung der Luft bezeichnet werden. Bei Schrägessen oder sogenannten Downdrafts, bei denen das Filterelement in einem Neigungswinkel von 40-50° zur Horizontalen oder im Extremfall sogar senkrecht steht liegen die Vorderseite und Rückseite unter einem entsprechenden Winkel zu Horizontalen. Die Richtungsangaben wie oben, unten, vorne und hinten sind dann entsprechend auszulegen. Indem der Strömungswiderstand des Filterelement erfindungsgemäß so eingestellt ist, dass dieser in der Mitte des aktiven Filterbereiches geringer ist als in den Randbereichen des aktiven Filterbereiches, wird das Strömungsverhalten der Luft, die durch den Randabsaugbereich oder -spalt hindurchgetreten ist optimiert. Insbesondere wird das Durchtreten der Luft durch den Randbereich des aktiven Filterbereiches, der sich oberhalb des beziehungsweise bezogen auf die Strömungsrichtung der Luft hinter dem Randabsaugbereiches befindet zumindest teilweise behindert. Hierdurch wird der Luftstrom zwangsweise in Richtung auf die Mitte des aktiven Filterbereiches gelenkt. Dies hat zur Folge, dass ein größerer Teil des aktiven Filterbereiches für den tatsächlichen Luftdurchtritt dienen kann. Hierdurch wird zum einen die Abscheidungsrate von Verunreinigungen, insbesondere von Fett gesteigert. Gleichzeitig wird aber auch die Luftströmung der Luft, die durch das Filterelement getreten ist, homogenisiert. Hierdurch werden Turbulenzen verhindert und dadurch das Fördervolumen der Dunstabzugshaube gegenüber Dunstabzugshauben mit Filterelement mit gleichmäßiger Strömungswiderstandsverteilung über den aktive Filterbereich gesteigert.

Gemäß einer Ausführungsform nimmt der Strömungswiderstand vom Randbereich des aktiven Filterbereiches kontinuierlich oder stufenweise zu der Mitte des aktiven Filterbereiches ab. Hierdurch kann dem Abstand, den die Luft, die durch den Randabsaugbereich hindurch getreten ist, bis zu der Stelle an dem diese durch die Filterlagen hindurch tritt, Rechnung getragen werden. Insbesondere kann auch an einer Stelle des Filterelementes, die zu dem Randabsaugbereich beabstandet ist, die Luft trotz der geringeren Geschwindigkeit, die die Luftströmung an dieser Stelle aufweist, zuverlässig durch das Filterelement hindurch treten beziehungsweise durch das Gebläse der Dunstabzugshaube durch das Filterelement hindurch gesogen werden. Die Luftströmung oberhalb des Filterelementes beziehungsweise bezogen auf die Strömungsrichtung der Luft hinter dem Filterelement ist daher homogenisiert, das heißt über die Fläche des Filterelementes verteilt.

Gemäß einer Ausführungsform weist das Filterelement mindestens eine Filterlage auf, die in der Mitte der Filterfläche der Filterlage eine größere Luftdurchlässigkeit aufweist als im Randbereich. Die Vergrößerung der Luftdurchlässigkeit kann hergestellt werden, indem in dem mittleren Bereich der Filterfläche die Durchlassöffnungen in der Filterlage vergrößert werden. So kann beispielsweise bei einer Streckmetalllage die Maschenweite im mittleren Bereich der Filterfläche vergrößert sein. Vorzugsweise wird die Luftdurchlässigkeit in der Mitte der Filterfläche aber durch Aussparung des Filtermaterials in diesem Bereich erzielt. Dies weist den Vorteil auf, dass das Filterelement einfach hergestellt werden kann. Beispielsweise kann das Filtermaterial in dem mittleren Bereich der Filterfläche ausgeschnitten oder ausgestanzt werden. Die Form der Aussparung des Filtermaterials richtet sich nach der Form des Filterelementes. Bei einem rechteckigen Filterelement wird daher vorzugsweise eine rechteckige Aussparung vorgesehen. Die Aussparungen in den Filterlagen können beispielsweise eine Größe von 1cm² bis 400cm² aufweisen sind aber immer so dimensioniert, dass diese nicht bis zum Rand des aktiven Filterbereiches reichen. In einer Ausführungsform weist die größte Aussparung beispielsweise eine Größe von 10cmx20cm bis 15cmx25cm auf.

Vorzugsweise weist das Filterelement mindestens zwei Filterlagen auf und die Verteilung der Luftdurchlässigkeit in den Filterflächen der mindestens zwei Filterlagen ist unterschiedlich. So kann beispielsweise eine Filterlage mit homogener Verteilung der Luftdurchlässigkeit, beispielsweise eine Streckmetalllage mit homogener Maschenweite, und eine weitere Filterlage mit einer erhöhten Luftdurchlässigkeit in der Mitte der Filterfläche verwendet werden. Vorzugsweise werden aber mehr als zwei Filterlagen, beispielsweise 6 bis 12, vorzugsweise 9 Filterlagen übereinander in dem Filterelement vorgesehen.

Erfindungsgemäß deckt der Bereich größerer Luftdurchlässigkeit in einer der Filterlagen einen größeren Teil des aktiven Filterbereiches des Filterelementes ab als der Bereich größerer Luftdurchlässigkeit in der Filterfläche der mindestens einen weiteren Filterlage. Die Größe des Bereiches größerer Luftdurchlässigkeit nimmt vorzugsweise von einer Filterlage zu der nächsten Filterlage ab beziehungsweise zu und die obere oder untere Filterlage weist eine homogene Luftdurchlässigkeitsverteilung auf. Wird die erhöhte Luftdurchlässigkeit durch eine Aussparung in der jeweiligen Filterlage erzeugt, so liegend die Aussparungen in den einzelnen Filterlagen übereinander und die Größe der Aussparungen nimmt von einer Filterlage zur nächsten hin ab. In der Filterlage, die zu der Filterlage mit der kleinsten Aussparung benachbart ist, das heißt an dieser anliegt, ist keine Aussparung mehr vorgesehen. Diese Filterlage kann die obere oder die untere Filterlage darstellen. Wird als Filtermaterial Streckmetall verwendet, so stellt die Filterlage ohne Aussparung vorzugsweise die obere Filterlage des Filterelementes dar. Das Filterelement muss zum Reinigen und zu Wartungszwecken aus der Dunstabzugshaube entnommen werden. In dem entnommenen Zustand wird die Oberseite des Filterelementes, die im eingebauten Zustand dem Inneren der Dunstabzugshaube zugewandt ist, für den Benutzer zugänglich. Indem die obere Filterlage keine Aussparung aufweist, liegen an dieser auch keine Kanten in der Filterfläche vor, die gegebenenfalls behandelt werden müssten, um Verletzungen des Benutzers zu verhindern. Von der durchgehenden Filterlage aus schließen sich nach unten weitere Filterlagen an, in denen Aussparungen vorgesehen sind, deren Größe von Lage zu Lage zunimmt. Gegebenenfalls kann als untere Lage eine weitere Lage mit homogener Luftdurchlässigkeitsverteilung, beispielsweise eine Streckmetalllage ohne Aussparung vorgesehen sein. Diese Ausführungsform bietet sich bei einem Filterelement an, das als Filterkassette separat zu der Prallplatte an der Dunstabzugshaube angebracht wird.

Gemäß einer weiteren Ausführungsform befindet sich die größte Aussparung in der mittleren Filterlage und die Größe der Aussparungen nimmt in beide Richtungen zu den Außenlagen hin ab. Bei einer weiteren Ausführungsform ist die kleinsten Aussparung in der mittleren Filterlage vorgesehen und die Aussparungen werden in beide Richtungen zu den äußeren Filterlagen hin größer. Bei diesen beiden Ausführungsformen und auch bei weiteren Ausgestaltungen der Verteilung der Aussparungen in den Filterlagen, sind vorzugsweise die äußeren Filterlagen auf beiden Seiten des Filterelementes durchgängig, das heißt ohne Aussparungen.

Alternativ oder zusätzlich zu dem Vorsehen von Aussparungen in zumindest einem Teil der Filterlagen, kann das Filterelement zusätzlich zu der mindestens einen Filterlage mindestens eine Sperrschicht aufweisen, die zumindest im Randbereich luftundurchlässige Bereiche aufweist. Die Sperrschicht kann zwischen weiteren Filterlagen aufgenommen sein oder als Deckschicht an der Oberseite oder Unterseite des Filterelementes dienen. Durch das Vorsehen einer solchen Sperrschicht wird die Strömung der Luft zu und durch das Filterelement durch die luftundurchlässigen Bereiche der Sperrschicht eingestellt. Die weitere Fläche der Sperrschicht, die nicht durch die luftundurchlässigen Bereiche gebildet ist, wird durch Öffnungen gebildet und erlaubt somit den Durchtritt durch die Sperrschicht. Die Sperrschicht kann als Blech oder Folie ausgestaltet sein. Die Verwendung eines Bleches, in das Durchtrittsöffnungen eingebracht sind, bringt den Vorteil mit sich, dass die Stabilität des Filterelementes durch diese Sperrschicht erhöht wird. Bei der Verwendung einer Folie, in der ebenfalls Durchtrittsöffnungen eingebracht sind, ist das geringe Gewicht der Sperrschicht von Vorteil. Als Blech kann beispielsweise ein Edelstahlblech verwendet werden. Als Folie kann beispielsweise eine Aluminiumfolie verwendet werden. Die Größe der Durchtrittsöffnungen kann im Zentimeterbereich liegen. Beispielsweise können runde Durchtrittsöffnungen mit einem Durchmesser von 1 bis 5cm eingebracht sein.

Die Sperrschicht kann eine gelochte und/oder geschlitzte Schicht darstellen. Die Form der Löcher und Schlitze, die als Durchtrittsöffnungen dienen, kann frei gewählt werden. Die Abmessungen der Durchtrittsöffnungen und die Verteilung der Durchtrittsöffnungen in der Fläche der Sperrschicht sind ebenfalls nicht auf eine bestimmte Ausführungsform beschränkt. So kann bei gleichmäßiger Verteilung von Löchern über die Fläche der Sperrschicht der Durchmesser der Löcher im Randbereich beispielsweise klein sein und der Durchmesser der Löcher zu der Mitte hin zunehmen. Vorzugsweise ist allerdings die Größe der Durchtrittsöffnungen über die Fläche der Sperrschicht gleich und lediglich die Verteilung, das heißt der Abstand zwischen den Löchern oder Schlitzen nimmt zu der Mitte der Sperrschicht hin ab. Die gleichbleibende Größe der Durchtrittsöffnungen bringt den Vorteil mit sich, dass diese Größe so gewählt werden kann, dass negative Effekte, wie eine Geräuschentwicklung bei zu kleinen Durchtrittsöffnungen verhindert werden kann und dennoch die gewünschte Verteilung der Strömungswiderstände eingestellt werden kann.

Das erfindungsgemäß verwendete Filterelement kann als separate Komponente ausgestaltet sein und einzeln in eine Dunstabzugshaube eingebracht werden. Allerdings liegt es auch im Rahmen der Erfindung, dass das Filterelement zumindest mit der Prallplatte, die zum Erzeugen des Randabsaugbereiches vorgesehen ist, eine bauliche Einheit bildet und mit dieser zusammen an der Dunstabzugshaube angebracht wird. Insofern betrifft die vorliegende Erfindung auch eine Filtereinheit, die ein erfindungsgemäß verwendetes Filterelement und eine Prallplatte umfasst.

Als Wrasenleitblech wird ein Luftleitelement bezeichnet, das in einem mittleren Bereich eine Prallplatte bildet und zusammen mit dem Gehäuse der Dunstabzugshaube oder mit einem weiteren Bereich des Wrasenleitblechs einen Randabsaugbereich bildet. Der Randabsaugbereich wird durch zumindest einen Schlitz oder Spalt, der/die in dem Wrasenleitblech eingebracht sein können, gebildet. Das Filterelement ist im eingebauten Zustand in der Dunstabzugshaube oberhalb des Wrasenleitblechs angeordnet. Die Größe des Filterelementes entspricht zumindest der Größe des Randabsaugbereiches, der die Prallplatte des Wrasenleitblechs umgibt und gegebenenfalls oberhalb der Prallplatte angeordnet ist.

Durch den Einsatz eines erfindungsgemäß verwendeten Filterelementes in der erfindungsgemäßen Dunstabzugshaube wird die Luftströmung oberhalb des Filterelementes homogenisiert und das Fördervolumen der Dunstabzugshaube daher verbessert.

Gemäß einer bevorzugten Ausführungsform stellen das Filterelement und das Wrasenleitblech eine vormontierte Einheit dar. Als vormontierte Einheit wird eine bauliche Einheit verstanden, die montiert an den Ort der Dunstabzugshaube gebracht werden kann und dort als eine Einheit mit der Dunstabzugshaube verbunden, das heißt an dieser befestigt werden kann. Die Einheit kann auch als Ganzes wieder von der Dunstabzugshaube gelöst, das heißt von dieser abgenommen werden. Diese Ausführungsform weist den Vorteil auf, dass die Ausrichtung des Randabsaugbereiches und des Filterelement im Werk eingestellt wird. Somit kann sichergestellt sein, dass die Bereiche des größten Strömungswiderstandes des Filterelementes über dem Randabsaugbereich liegen und die Effekte des erfindungsgemäß verwendeten Filterelementes somit optimal genutzt werden können. Weiterhin ist bei dieser Ausführungsform von Vorteil, dass das Wrasenleitblech die Unterseite des Filterelementes vor dem Zugriff und dem Einblick durch den Benutzer der Dunstabzugshaube schützt. Somit kann beispielsweise ein Filterelement verwendet werden, bei dem in der unteren Filterlage die größte Aussparung in der Mitte vorgesehen ist. Die Größe der Aussparungen nimmt von Lage zu Lage nach oben hin ab und die obere Lage stellt eine durchgehende Lage ohne Aussparung in dar. Für den Benutzer ist auch nach dem Entnehmen der Einheit lediglich die obere Lage, die beispielsweise eine Streckmetalllage sein kann, zugänglich. Verletzungen des Benutzers an Kanten an Aussparungen in den weiteren Lagen können dadurch verhindert werden. Zudem kann eine vormontierte Einheit beispielsweise zu Reinigungszwecken leicht entnommen werden.

Gemäß einer bevorzugten Ausführungsform weist das Wrasenleitblech eine Einströmgeometrie auf, durch die Luft nach dem Durchtreten durch den Randabsaugbereich des Wrasenleitblechs schräg auf das Filterelement gerichtet ist.

Als schräg auf das Filterelement gerichtet wird eine Luftströmungsrichtung bezeichnet, die in einem Winkel ungleich 90° auf die unter Fläche des Filterelementes auftrifft. Vorzugsweise ist die Einströmgeometrie so ausgelegt, dass die Luftströmung in Richtung der Mitte des Filterelementes gerichtet ist und unter einem Winkel von kleiner 60°, vorzugsweise kleiner 45° auf das Filterelement auftrifft. Hierzu können an dem Wrasenleitblech im Bereich der Randabsaugung Leitflächen vorgesehen sein. Der Neigungswinkel zwischen der Horizontalen und einer inneren Leitfläche ist hierbei vorzugsweise größer als der Neigungswinkel einer äußeren Anströmfläche zu der Horizontalen und die Durchlassöffnung ist oberhalb der Prallplatte des Wrasenleitblechs zumindest bereichsweise in der Ebene vorgesehen, in der die innere Leitfläche gebildet ist. Bei dieser Ausführungsform weist das Wrasenleitblech daher eine Geometrie auf, bei der aus der Ebene der Prallplatte die innere Leitfläche nach oben und innen gebogen ist und sich in dieser Ebene der Leitfläche zumindest eine Einlassöffnung, beispielsweise in Form eines Schlitzes anschließt. Das Ende dieser Ebene liegt an der Unterseite des Filterelementes an. Von diesem Ende aus ist das Wrasenleitblech nach außen, im Wesentlichen parallel zu dem Filterelement gebogen und ist am äußeren Rand nach unten gebogen, wodurch eine Anströmfläche gebildet wird, die auf die Einlassöffnung gerichtet ist.

Vorteile und Merkmale, die bezüglich dem erfindungsgemäß verwendeten Filterelement beschrieben werden, gelten - soweit anwendbar - auch für die erfindungsgemäße Dunstabzugshaube und umgekehrt.

Die Erfindung wird im Folgenden erneut unter Bezugnahme auf die beiliegenden Figuren genauer erläutert. Es zeigen:
- Figur 1:: eine schematische, perspektivische Ansicht einer Ausführungsform der erfindungsgemäßen Dunstabzugshaube;
- Figur 2:: eine schematische Seitenansicht einer Filtereinheit mit einem Filterelement nach dem Stand der Technik;
- Figur 3:: eine schematische Seitenansicht einer Ausführungsform einer Filtereinheit mit erfindungsgemäß verwendeten Filterelement;
- Figur 4:: eine schematische Schnittansicht des seitlichen Bereiches der Filtereinheit nach Figur 3;
- Figur 5:: eine schematische Schnittansicht einer Ausführungsform des erfindungsgemäß verwendeten Filterelementes;
- Figur 6:: eine schematische perspektivische Unteransicht des mittleren Bereiches der Ausführungsform des Filterelementes nach Figur 5;
- Figur 7:: eine schematische Draufsicht auf eine Ausführungsform einer Sperrschicht für eine Ausführungsform des erfindungsgemäß verwendeten Filterelementes;
- Figur 8:: eine schematische Draufsicht auf eine weitere Ausführungsform einer Sperrschicht für eine Ausführungsform des erfindungsgemäß verwendeten Filterelementes; und
- Figur 9:: eine schematische Schnittansicht einer weiteren Ausführungsform des erfindungsgemäß verwendeten Filterelementes.

Gleiche Bestandteile sind in den Figuren mit den gleichen Bezugszeichen versehen und deren Aufbau und Funktion wird gegebenenfalls nur einmalig erläutert.

Sofern nicht anders angegeben werden Richtungsbezeichnungen, wie vorne, hinten, oben und unten bezüglich der Richtungen an einem Filterelement verwendet, das in die Ansaugöffnung einer Dunstabzugshaube eingebracht ist. Als Oberseite wird beispielsweise die Seite bezeichnet, die in dem Betriebszustand des Filterelementes, in dem dieses in der Ansaugöffnung der Dunstabzugshaube eingebracht ist, dem Inneren der Dunstabzugshaube zugewandt ist. Als Unterseite wird beispielsweise die Seite bezeichnet, die die Anströmseite des Filterelementes in dem Betriebszustand darstellt.

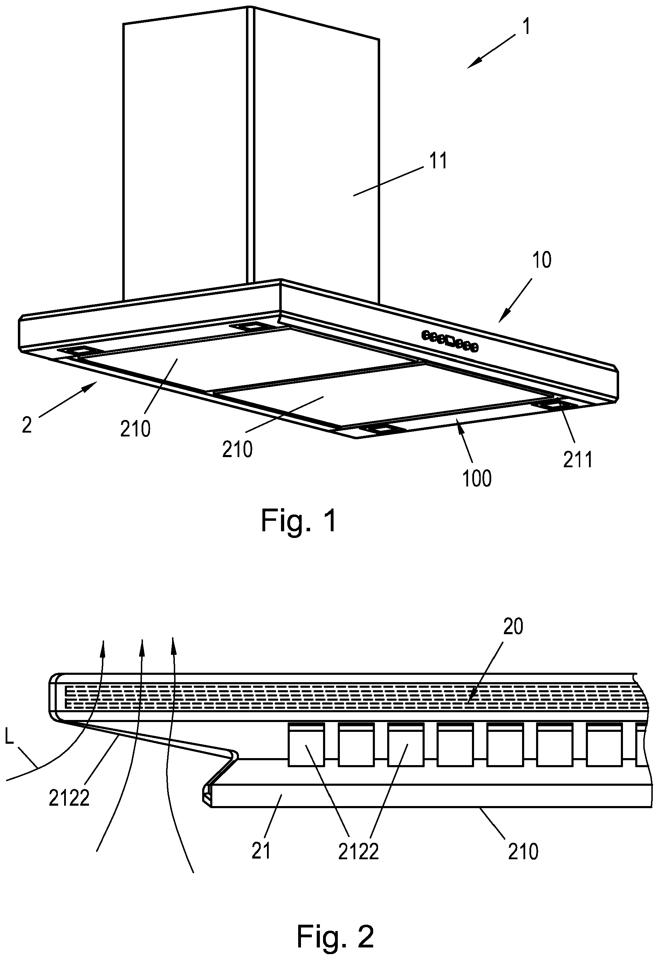

In Figur 1 ist eine Ausführungsform der erfindungsgemäßen Dunstabzugshaube 1 gezeigt. Die Dunstabzugshaube 1 besteht aus einer Sichthaube 10 und einem sich oberhalb der Sichthaube 10 erstreckenden Kamin 11. In der Unterseite der Sichthaube 10 ist eine Absaugöffnung 100 vorgesehen, über die Luft in das Innere der Dunstabzugshaube durch ein Gebläse (nicht gezeigt) eingesaugt wird. In der Absaugöffnung 100 sind in der dargestellten Ausführungsform zwei Filtereinheiten 2 eingebracht. Von den Filtereinheiten 2 ist in dieser Ansicht lediglich die jeweilige Prallplatte 210 und der Randabsaugbereich 211 zu sehen.

Der Aufbau einer Filtereinheit 2 nach dem Stand der Technik ist in Figur 2 gezeigt. Diese Filtereinheit 2 besteht aus einem Wrasenleitblech 21 und einem durch das Wrasenleitblech 21 gehaltenes Filterelement 20. In dem Wrasenleitblech 21 ist eine Prallplatte 210 gebildet. Oberhalb der Prallplatte 210 sind in geneigten Bereichen des Wrasenleitblechs 210 Einlassöffnungen 2122 in Form von Schlitzen eingebracht.

Wird diese Filtereinheit 2 von Luft von unten angeströmt, so wird sich die in Figur 2 schematisch angedeutete Luftströmung L einstellen. Insbesondere wird die Luft durch die Einlassöffnungen 2122 durchtreten und im Wesentlichen senkrecht nach oben zu dem Filterelement 20 gelangen. Dieses wird daher ausschließlich im Randbereich von der zu reinigenden Luft durchströmt. Der mittlere Bereich, der nach unten durch die Prallplatte 210 abgedeckt ist, wird nicht genutzt.

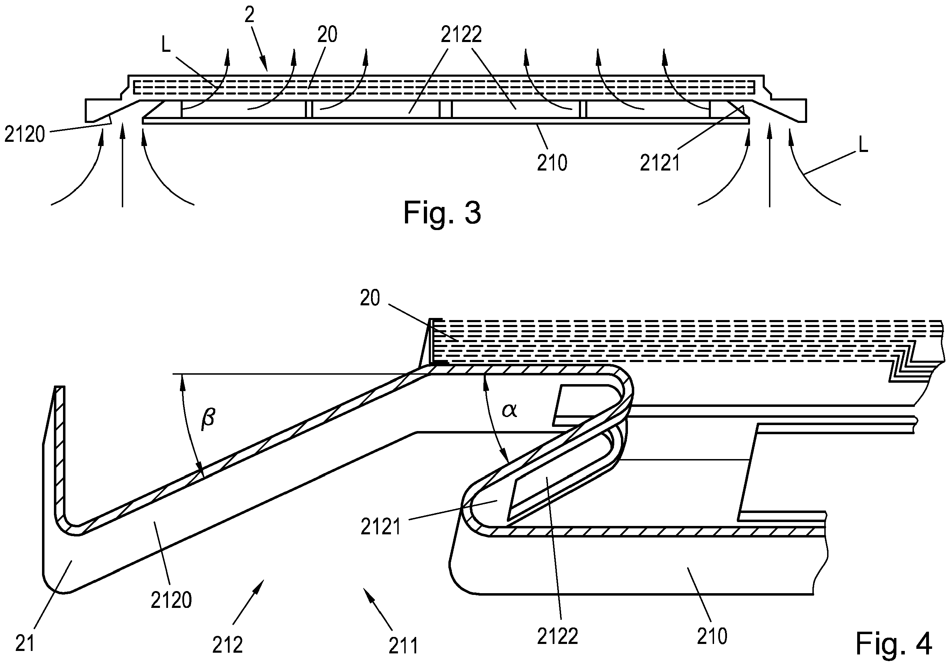

In Figur 3 ist eine Ausführungsform des erfindungsgemäß verwendeten Filterelementes 20 in einer Filtereinheit 2 gezeigt. Aufgrund der unterschiedlichen Verteilung der Luftdurchlässigkeiten über der Fläche des Filterelementes 20, die später genauer erläutert wird, stellt sich die in der Figur 3 gezeigte Luftströmung L ein. Insbesondere ist die Luftströmung L nicht, wie im Stand der Technik ausschließend nach oben gerichtet, sonder verteilt sich über die Fläche des Filterelementes 20 bis zur Mitte des Filterelementes 20. Zu dieser Ausrichtung der Luftströmung trägt auch die in den Figuren 3 und 4 gezeigte, bevorzugte Ausgestaltung des Wrasenleitblechs 21 mit der daran vorgesehenen Einströmgeometrie 212 im Randabsaugbereich 211 bei. Wie sich aus Figur 4 entnehmen lässt, bildet bei der gezeigten Ausführungsform der größte Teil der Unterseite des Wrasenleitblechs 21 eine ebene Prallplatte 210. Die Ränder der Prallplatte 210 sind so weit nach oben gebogen, dass diese in senkrechter Projektion auf die Prallplatte 210 in der Fläche der Prallplatte 210 liegen. Die so geneigten Ränder der Prallplatte 210 stellen Leitflächen 2121 zum Leiten von Luft dar. In der Ebene dieser Leitflächen 2121 sind Einlassöffnungen 2122 in Form von Schlitzen eingebracht. Das Ende der Ebene der Leitflächen 2121 ist nach außen gebogen und geht in eine Fläche über, die parallel zu der Prallplatte 210 ist. Die Leitflächen 2121 stehen in einem Neigungswinkel α zu dieser Fläche. Auf der Oberseite dieser Fläche liegt das erfindungsgemäß verwendeten Filterelement 20 auf. An dem äußeren Ende der zu der Prallplatte 210 parallelen Fläche ist um einen Winkel β nach unten gebogen. Der so abgewinkelte Bereich stellt eine Anströmfläche 2120 dar, mittels derer Luft, die die Filtereinheit 2 von unten anströmt, zu den Einlassöffnungen 2122 geleitet werden kann. Der Neigungswinkel α ist vorzugsweise größer als der Neigungswinkel β. Hierdurch kann ein schräges Anströmen der Unterseite des Filterelementes 20 erzielt werden.

Wird bei der in Figur 4 gezeigten Ausführungsform der Filtereinheit 2 ein Filterelement 20 nach dem Stand der Technik verwendet, so wird die Luftströmung unmittelbar im Bereich der Einlassöffnungen 2122 durch das Filterelement 20 hindurch treten.

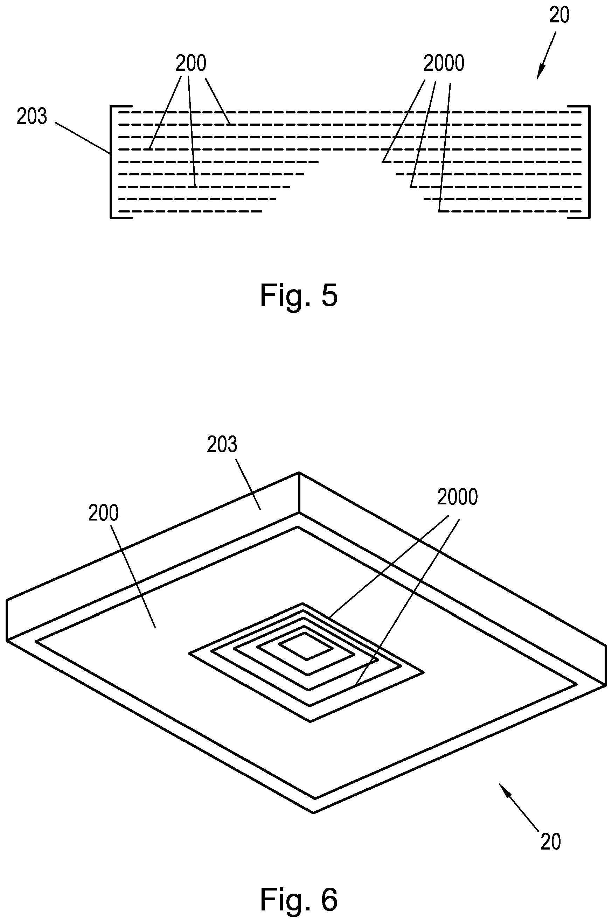

Erfindungsgemäß wird aber ein Filterelement 20 verwendet, bei dem der Strömungswiderstand des Filterelementes 20 in der Mitte des aktiven Filterbereiches 202 geringer ist als der Strömungswiderstand im Randbereich des aktiven Filterbereiches 202. Eine Ausführungsform des Filterelementes 20 ist in Figuren 5 und 6 schematisch gezeigt.

Das Filterelement 20 besteht aus Filterlagen 200, die in einem Rahmen 203 gehalten sind. Ist das Filterelement 20 in einer Filtereinheit 2 mit Wrasenleitblech integriert, kann der Rahmen 203 beispielsweise durch den oberen Teil des Wrasenleitblechs 21 gebildet werden. Auch andere Befestigungen der Filterlagen 20, wie beispielsweise über Schienen sind möglich.

Bei der in Figuren 5 und 6 gezeigten Ausführungsform sind neun Filterlagen 200 vorgesehen. In den unteren fünf Filterlagen 200 ist im mittleren Bereich der Filterfläche jeweils eine Aussparung 2000 eingebracht. Die Größe der Aussparungen 2000 nimmt von der unteren Filterlage 200 der jeweils darüberliegenden Filterlage 200 ab. Die Anzahl der von der Luftströmung zu durchströmenden Filterlagen 200 nimmt bei dieser Ausführungsform daher von dem Randbereich zu der Mitte des Filterelementes 20 hin kontinuierlich von neun auf vier ab.

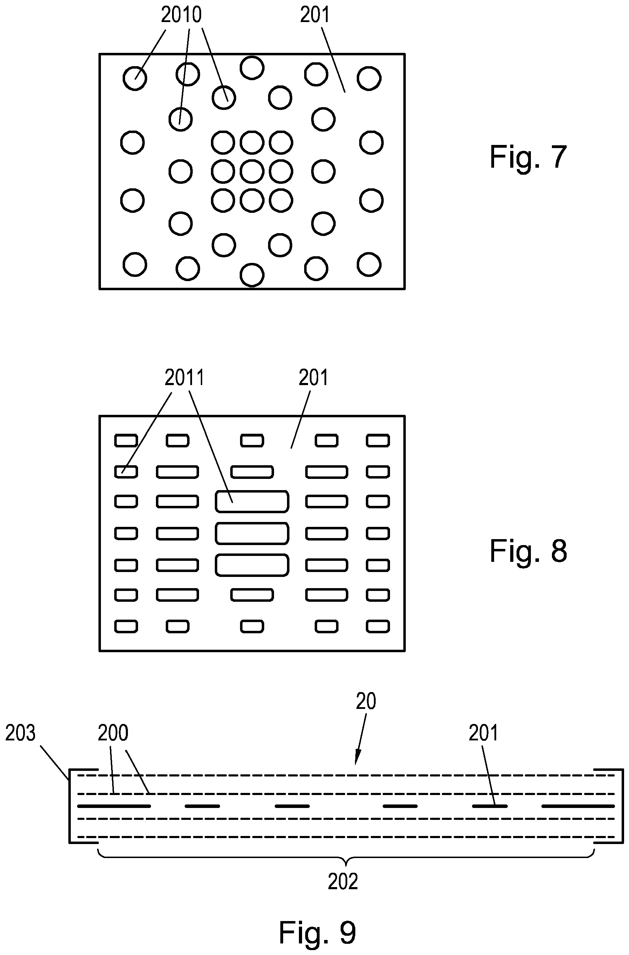

In den Figuren 7 bis 9 sind zwei weitere Ausführungsform des erfindungsgemäß verwendeten Filterelementes 20 gezeigt. Bei dieser Ausführungsform ist die Anzahl der Filterlagen 200 auf vier reduziert. Zwischen den beiden mittleren Filterlagen 200 ist eine Sperrschicht 201 eingebracht, die die gleiche Breite und Tiefe, wie die Filterlagen 200 aufweist. Die Sperrschicht 201 besteht aus einem luftundurchlässigen Material, wie beispielsweise Blech oder einer Metallfolie. In die Sperrschicht 201 sind Durchlassöffnungen in Form von runden Löchern 2010 (siehe Figur 7) und/oder in Form von Schlitzen 2011 (siehe Figur 8) eingebracht.

Bei der Ausgestaltung nach Figur 7 weisen alle Durchlassöffnungen, insbesondere Löcher 2010 die gleiche Größe auf. Allerdings ist der Abstand zwischen den Löchern 2010 im Randbereich der Sperrschicht 201 größer als in der Mitte der Sperrschicht 201. Bei der Ausgestaltung nach Figur 7 nimmt die Größe der Schlitze 2011, das heißt deren Breite und Länge zur Mitte der Sperrschicht 201 hin zu und zudem nimmt der Abstand zwischen den Schlitzen 2011 zur Mitte der Sperrschicht 201 hin ab.

Die gezeigten Figuren sind nicht maßstabsgetreu. Zudem ist die Erfindung nicht auf die dargestellten Ausführungsformen beschränkt.

Mit der vorliegenden Erfindung lässt sich eine Reihe von Vorteilen erzielen. Insbesondere kann auf einfache Weise eine gleichmäßige Strömungsverteilung auf der Rückseite des Filterelementes, das heißt oberhalb des Filterelementes erzielt werden. Dies führt unter anderem zu einer Erhöhung des Fördervolumens der Dunstabzugshaube im Vergleich zu Dunstabzugshaube mit Filterelementen gemäß dem Stand der Technik. Weiterhin kann durch das erfindungsgemäß verwendete Filterelement beziehungsweise bei der erfindungsgemäßen Dunstabzugshaube eine Geräuschreduzierung erzielt werden. Schließlich führt der erfindungsgemäße Aufbau des Filterelementes zu einer Verlängerung der Standzeit des Filters, da auch der mittlere aktive Filterbereich zur Fettspeicherung verwendet wird.

### Bezugszeichenliste

- 1: Dunstabzugshaube
- 10: Sichthaube
- 100: Absaugöffnung
- 11: Kamin
- 2: Filtereinheit
- 20: Filterelement
- 200: Filterlage
- 2000: Aussparung
- 201: Sperrschicht
- 2010: Loch
- 2011: Schlitz
- 202: aktiver Filterbereich
- 203: Rahmen
- 21: Wrasenleitblech
- 210: Prallplatte
- 211: Randabsaugbereich
- 212: Einströmgeometrie
- 2120: Anströmfläche
- 2121: Leitfläche
- 2122: Einlassöffnung

- α: Neigungswinkel
- β: Neigungswinkel

- L: Luftströmung

## Patentansprüche

1. Dunstabzugshaube mit einer Ansaugöffnung, an der zumindest ein Filterelement (20) und mindestens ein Wrasenleitblech (21) mit Randabsaugbereich (211) vorgesehen sind, wobei das Filterelement (20) einen aktiven Filterbereich (202) aufweist, in dem mindestens eine Filterlage (200) vorgesehen ist, wobei der Strömungswiderstand des Filterelementes (20) in der Mitte des aktiven Filterbereiches (202) geringer ist als der Strömungswiderstand im Randbereich des aktiven Filterbereiches (202), **dadurch gekennzeichnet, dass** auch der mittlere aktive Filterbereich (202) zur Fettspeicherung dient und das Filterelement (20) mindestens zwei Filterlagen (200) aufweist und ein Bereich größerer Luftdurchlässigkeit in einer der Filterlagen (200) einen größeren Teil des aktiven Filterbereiches (202) des Filterelementes (20) abdeckt als der Bereich größerer Luftdurchlässigkeit in der Filterfläche der mindestens einen weiteren Filterlage (200).

2. Dunstabzugshaube nach Anspruch 1, **dadurch gekennzeichnet, dass** der Strömungswiderstand vom Randbereich des aktiven Filterbereiches (202) kontinuierlich oder stufenweise zu der Mitte des aktiven Filterbereiches (202) abnimmt.

3. Dunstabzugshaube nach einem der Ansprüche 1 oder 2, **dadurch gekennzeichnet, dass** das Filterelement (20) mindestens eine Filterlage (200) aufweist, die in der Mitte der Filterfläche der Filterlage (200) eine größere Luftdurchlässigkeit aufweist als im Randbereich.

4. Dunstabzugshaube nach einem der Ansprüche 1 bis 3, **dadurch gekennzeichnet, dass** das Filterelement (20) mindestens zwei Filterlagen (200) aufweist und die Verteilung der Luftdurchlässigkeit in den Filterflächen der mindestens zwei Filterlagen (200) unterschiedlich ist.

5. Dunstabzugshaube nach einem der Ansprüche 1 bis 4, **dadurch gekennzeichnet, dass** das Filterelement (20) zusätzlich zu der mindestens einen Filterlage (200) mindestens eine Sperrschicht (201) aufweist, die zumindest im Randbereich luftundurchlässige Bereiche aufweist.

6. Dunstabzugshaube nach Anspruch 5, **dadurch gekennzeichnet, dass** die Sperrschicht (201) eine gelochte und/oder geschlitzte Schicht darstellt.

7. Dunstabzugshaube nach einem der Ansprüche 1 bis 6, **dadurch gekennzeichnet, dass** das Filterelement (20) und das Wrasenleitblech (21) eine vormontierte Einheit darstellen.

8. Dunstabzugshaube nach einem der Ansprüche 1 bis 7, **dadurch gekennzeichnet, dass** das Wrasenleitblech (21) eine Einströmgeometrie (212) aufweist, durch die Luft nach dem Durchtreten durch den Randabsaugbereich (211) des Wrasenleitblechs (21) schräg auf das Filterelement (20) gerichtet ist.

## Claims

1. Vapour extractor having an intake opening, at which at least one filter element (20) and at least one vapour baffle (21) are provided with an edge extraction region (211), wherein the filter element (20) has an active filter region (202), in which at least one filter layer (200) is provided, wherein the flow resistance of the filter element (20) is less in the centre of the active filter region (202) than the flow resistance in the edge region of the active filter region (202), **characterised in that** the central active filter region (202) also serves for grease storage and the filter element (20) has at least two filter layers (200), and a region of greater air permeability in one of the filter layers (200) covers a larger part of the active filter region (202) of the filter element (20) than the region of greater air permeability in the filter surface of the at least one further filter layer (200).

2. Vapour extractor according to claim 1, **characterised in that** the flow resistance decreases continuously or stepwise from the edge region of the active filter region (202) to the centre of the active filter region (202).

3. Vapour extractor according to one of claims 1 or 2, **characterised in that** the filter element (20) has at least one filter layer (200) which in the centre of the filter surface of the filter layer (200) has a greater air permeability than in the edge region.

4. Vapour extractor according to one of claims 1 to 3, **characterised in that** the filter element (20) has at least two filter layers (200) and the distribution of the air permeability is different in the filter surfaces of the at least two filter layers (200).

5. Vapour extractor according to one of claims 1 to 4, **characterised in that** the filter element (20) has, in addition to the at least one filter layer (200), at least one barrier layer (201) which has air-impermeable areas at least in the edge region.

6. Vapour extractor according to claim 5, **characterised in that** the barrier layer (201) represents a perforated and/or slotted layer.

7. Vapour extractor according to one of claims 1 to 6, **characterised in that** the filter element (20) and the vapour baffle (21) represent a preassembled unit.

8. Vapour extractor according to one of claims 1 to 7, **characterised in that** the vapour baffle (21) has an inflow geometry (212), by which air, after passing through the edge extraction region (211) of the vapour baffle (21), is directed obliquely to the filter element (20).

## Revendications

1. Hotte aspirante comprenant une ouverture d'aspiration sur laquelle sont ménagés au moins un élément filtrant (20) et au moins une plaque de guidage de vapeurs (21) dotée d'une zone d'aspiration périphérique (211), l'élément filtrant (20) présentant une zone de filtrage (202) active dans laquelle est ménagée au moins une couche filtrante (202), la résistance à l'écoulement de l'élément filtrant (20) au centre de la zone filtrante (202) active étant inférieure à la résistance à l'écoulement dans la partie périphérique de la zone filtrante (202) active, **caractérisée en ce que** la zone filtrante (202) active centrale sert également au stockage de graisses et **en ce que** l'élément filtrant (20) présente au moins deux couches filtrantes (200) et **en ce qu'**une zone de plus grande perméabilité à l'air dans l'une des couches filtrantes (200) recouvre une partie plus grande de la zone filtrante (202) active de l'élément filtrant (20) que la zone de plus grande perméabilité à l'air dans la surface filtrante de l'au moins une autre couche filtrante (200).

2. Hotte aspirante selon la revendication 1, **caractérisée en ce que** la résistance à l'écoulement de la partie périphérique de la zone filtrante (202) active diminue en continu ou progressivement vers le milieu de la zone filtrante (202) active.

3. Hotte aspirante selon l'une quelconque des revendications 1 ou 2, **caractérisée en ce que** l'élément filtrant (20) présente au moins une couche filtrante (200) qui présente au milieu de la surface filtrante de la couche filtrante (200) une perméabilité à l'air plus grande que dans la partie périphérique.

4. Hotte aspirante selon l'une quelconque des revendications 1 à 3, **caractérisée en ce que** l'élément filtrant (20) présente au moins deux couches filtrantes (200) et **en ce que** la répartition de la perméabilité à l'air dans les surfaces filtrantes des au moins deux couches filtrantes (200) est différente.

5. Hotte aspirante selon l'une quelconque des revendications 1 à 4, **caractérisée en ce que** l'élément filtrant (20) présente, en plus de l'au moins une couche filtrante (200), au moins une couche barrière (201) qui présente des zones imperméables à l'air au moins dans la partie périphérique.

6. Hotte aspirante selon la revendication 5, **caractérisée en ce que** la couche barrière (201) représente une couche à perforations et/ou à fentes.

7. Hotte aspirante selon l'une quelconque des revendications 1 à 6, **caractérisée en ce que** l'élément filtrant (20) et la plaque de guidage de vapeurs (21) représentent une unité préassemblée.

8. Hotte aspirante selon l'une quelconque des revendications 1 à 7, **caractérisée en ce que** la plaque de guidage de vapeurs (21) présente une géométrie d'admission (212) au moyen de laquelle l'air, après le passage à travers la zone d'aspiration périphérique (211) de la plaque de guidage de vapeurs (21), est orienté de manière oblique sur l'élément filtrant (20).
